Europäisches Patentamt

European Patent Office

Office européen des brevets

(19)

(11) Veröffentlichungsnummer : **0 094 507**
**B1**

(12) **EUROPÄISCHE PATENTSCHRIFT**

(45) Veröffentlichungstag der Patentschrift :
04.03.87

(21) Anmeldenummer : 83103551.4

(22) Anmeldetag : 13.04.83

(51) Int. Cl.⁴ : **E 04 B** 1/60, E 04 F 13/14,
E 04 C 2/04, C 04 B 28/14

(54) **Plattenwand mit ausgespachtelter Fuge.**

(30) Priorität : 15.05.82 DE 3218397

(43) Veröffentlichungstag der Anmeldung :
23.11.83 Patentblatt 83/47

(45) Bekanntmachung des Hinweises auf die Patenterteilung : 04.03.87 Patentblatt 87/10

(84) Benannte Vertragsstaaten :
AT GB NL SE

(56) Entgegenhaltungen :
FR-A-    534 262
US-A- 3 297 601
US-A- 3 303 147
US-A- 3 435 582

(73) Patentinhaber : Gebr. Knauf Westdeutsche Gipswerke
Am Bahnhof 6
D-8715 Iphofen (DE)

(72) Erfinder : Fischer, Hugo
Hans-Kesenbrodt-Strasse 19
D-8713 Segnitz (DE)
Erfinder : Kohlmann, Armin
Moltkestrasse 8
D-8710 Kitzingen (DE)
Erfinder : Zehn, Karl
Gartenstrasse 14
D-8711 Fröhstockheim (DE)

(74) Vertreter : Böhme, Volker, Dr. et al
Patentanwälte Dr. Böhme, Kessel, Böhme Karolinenstrasse 27
D-8500 Nürnberg (DE)

EP 0 094 507 B1

**Beschreibung**

Die Erfindung betrifft eine Plattenwand, bei der zwei ummantelte Bauplatten mit je einer Längsstirnseite auf Stoß zueinander angeordnet sind, mit hinteren Längskanten einander anliegend vorgesehen und auf der hinteren Flachseite mit dem Längsrandstreifen an einem Trägerbalken anliegend an diesem befestigt sind, bei der jede der Bauplatten im Stoßbereich einen bogenförmigen, mit Ummantelung versehenen Übergang über die volle Plattendicke von der vorderen Flachseite bis zu der hinteren Längskante bildet, bei der die somit im Querschnitt gewölbttrichterförmige Fuge unter Weglassung eines Bewehrungsstreifens mit einer Füllmasse ausgespachtelt ist.

Bei einer bekannten (FR-A-5 34 262) Plattenwand dieser Art ist der Übergang ein flacher Bogen, wobei die Öffnungsbreite der gewölbttrichterförmigen Fuge relativ groß ist und die Platte im Querschnitt zur hinteren Längskante hin jeweils relativ spitz auslaufen. Die Füllmasse erstreckt sich über die volle Plattendicke, und ein Bewehrungsstreifen ist nicht vorgesehen. Wird bei dieser Plattenwand eine herkömmliche Füllmasse verwendet, so wird der Stoß aufgrund der von den gegeneinander arbeitenden Längsstirnseiten der Bauplatten bewirkten Zug- und Druckspannungen Schaden nehmen.

Bei einer weiteren bekannten (US-A-34 35 582) Plattenwand erstreckt sich ein viertelkreisförmiger Übergang nur über einen Teil der Längsstirnseite, die zur hinteren Längskante hin plan ist. Die Wandfuge geht an der vorderen Flachseite in eine Einsenkung über, in die ein Bewehrungsstreifen eingelegt ist, der überspachtelt ist. Über die Zusammensetzung der Füllmasse ist nichts ausgesagt. Der Bewehrungsstreifen macht nicht nur die Einsenkung an der vorderen Flachseite, sondern auch zusätzliche Arbeitsgänge bei der Herstellung der Plattenwand notwendig.

Die Erfindung befaßt sich auch mit einer Füllmasse einer Plattenfuge, die hergestellt ist aus einer Mischung von Gips (Calciumsulfat-Halbhydrat), Kalksteinmehl, Glimmer, Dispersionspulver, Sulfatbeschleuniger, Cellulose, Keratin-Verzögerer und Netzmittel bei einem bestimmten Anmachwasserbedarf. Bei einer bekannten (CA-A-715 620) Füllmasse dieser Art ist bis zu 65 % Gips vorgesehen, der vermutlich β-Gips ist. Diese Füllmasse besitzt nur eine beschränkte Festigkeit, da auch in ihr ein Bewehrungsstreifen vorgesehen ist. Somit führt auch die Verwendung dieser Füllmasse bei der vorher erörterten Plattenwand nicht zur Vermeidung des arbeitsintensivierenden Bewehrungsstreifens.

Aufgabe der Erfindung ist es nun, eine Plattenwand der eingangs genannten Art zu schaffen, bei der aufgrund geeigneter Gestaltung der Fuge und geeigneter Zusammensetzung der Füllmasse die Festigkeit des Stoßes verbessert ist. Die Erfindung sieht, diese Aufgabe lösend, ist. Die Erfindung sieht, diese Aufgabe lösend, vor, daß die Füllmasse hergestellt ist aus einer Mischung von Gips (Calciumsulfat-Halbhydrat), Kalksteinmehl, Glimmer, Dispersionspulver, Sulfatbeschleuniger, Cellulosederivat, Keratin-Verzögerer und Netzmittel bei einem bestimmten Anmachwasser-Feststoffverhältnis und daß der Übergang (4) von der vorderen Flachseite (5) zur hinteren Längskante (7) viertelkreisförmig ausgebildet ist und die Mischung, aus welcher die Füllmasse (9) hergestellt ist, 70-95 % α-Gips enthält und unter Weglassung von Zusätzen wie Polyvinylalkohol, Asbest und Bentonit auf ein Anmachwasser-Feststoffverhältnis von maximal 0,5 eingestellt ist.

Gemäß der Erfindung ist die Fläche des ummantelten viertelkreisförmigen Überganges bei relativ kleiner Öffnungsbreite der trichterförmigen Fuge maximal vergrößert, so daß die Füllmasse möglichst viel Kontaktfläche hat. Die Füllmasse hat zu verhindern, daß die benachbarten Endränder der Platten gegeneinander arbeiten, und nimmt Zug- und Druckspannungen aufgrund der erfindungsgemäßen Fugengestaltung verbessert auf. Ein Markieren der Fuge aufgrund von Druckspannungen tritt nicht bzw. nur in verminderter Deutlichkeit auf.

Durch den hohen Anteil an α-Gips (Calciumsulfat-Halbhydrat) sind die erwünschten Festigkeitseigenschaften erreicht. Der niedrige Wasserbedarf ist für die Festigkeitseigenschaften der (ausgehärteten) Füllmasse günstig. Er läßt sich erreichen, weil die erfindungsgemäße Füllmasse Zusätze wie Polyvinylalkohol, Asbest und Bentonit nicht aufweist. Statt des Polyvinylalkohols ist mehr α-Gips verwendet. Obwohl die erfindungsgemäße Füllmasse auch noch weitere Komponenten aufweisen kann, weist sie diese in der Regel nicht auf. Bentonit, das zu starkem Schwinden führt und die Geschmeidigkeit der angemachten Spachtelmasse verbessert, ist weggelassen, weil aufgrund der Erfindung die Forderungen an die Spachtelbarkeit nicht so hoch wie bei Verwendung eines Bewehrungsstreifens sind.

Es liegt eine im Volumen und an der Wandvorderseite ausreichend große Fuge vor, was beim Ausspachteln von Vorteil ist und auch die Festigkeit der Plattenverbindung durch die Füllmasse verbessert. Weiterhin ist die Füllmasse auf Gipsbasis in ihren Eigenschaften so verbessert, daß sie die beiden Platten an der Fuge auch ohne Bewehrungsstreifen rißfrei zusammenhält. Die Füllmasse besitzt minimales Schwinden in der Fuge, gute Haftfestigkeit zum Karton, hohe Festigkeiten, insbesondere hinsichtlich Zug- und Druckspannungen. Es wird eine Reißfestigkeit der Verfügung von ca. 70 N/cm erreicht.

Die Festigkeitseigenschaften der Füllmasse sind günstig eingestellt, wenn die Mischung, aus welcher die Füllmasse hergestellt ist, mindestens 75 %, vorzugsweise 85 % α-Gips enthält. Der Anteil an α-Gips wird vorzugsweise nicht über 90 % hinaus erhöht.

Besonders zweckmäßig und vorteilhaft ist es auch, wenn die Mischung von 6-13 %, vorzugsweise ca. 10 %, Kalksteinmehl und/oder wenn die Mischung von 3-8 %, vorzugsweise ca. 5 %, Glimmer enthält. Diese Anteile von Kalksteinmehl und Glimmer verbessern die erwünschten Eigenschaften weiter.

Besonders zweckmäßig und vorteilhaft ist es auch, wenn die Mischung ein Kunststoff-Dispersionspulver aus einem Vinyl-Copolymerisat enthält. Das mit 1,5-2,5 %, in der Regel mit ca. 2 %, vorgesehene Dispersionspulver ist für die erfindungsgemäßen Zwecke und Ziele von Vinyl-Copolymerisat günstig gewählt.

Besonders zweckmäßig und vorteilhaft ist es weiterhin, wenn die Mischung als Cellulosederivat von 0,2 bis 0,6 %, ca. 0,4 %, Celluloseäther enthält. Dieser fördert unter anderem die Verklebung mit dem Karton der Ummantelung.

Der Sulfatbeschleuniger wird z. B. mit 0,5 bis 1,5 %, in der Regel mit ca. 1 %, zugegeben. Dabei ist es günstig, wenn die Mischung als Sulfatbeschleuniger Kalium- und/oder Aluminiumsulfat enthält. Der Keratin-Verzögerer läßt sich mit 0,05 bis 0,15 %, in der Regel mit ca. 0,1 %, vorsehen. Als Netzmittel wird z. B. Alkylsulfat oder Alkylarylsulfonat vorgesehen ; es wird z. B. in Mengen von 0,04-0,06 %, in der Regel von ca. 0,05 %, vorgesehen. Die Korngröße der Bestandteile, z. B. des α-Gipses, des Kalksteinmehles und des Glimmers beträgt maximal 0,2 mm und ist in der Regel kleiner als 0,2 mm. Auch die Füllmasse enthält die Bestandteile der Mischung ; jedoch ist der α-Gips abgebunden. Die Füllmasse ist also durch das Abbinden gegenüber der Mischung abgeändert.

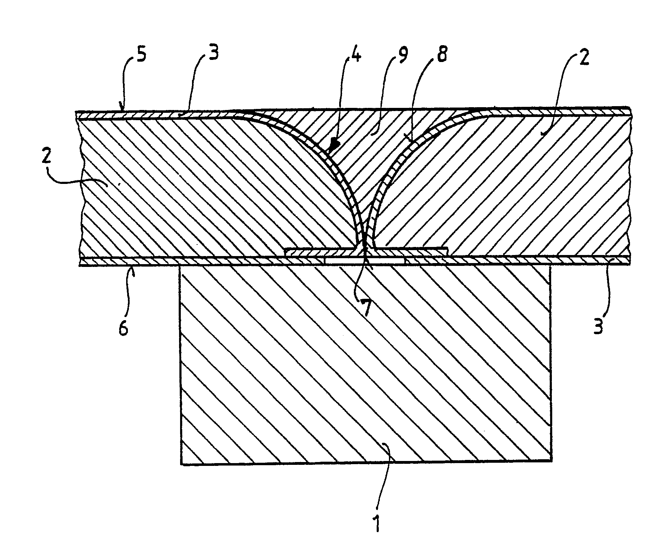

In der Zeichnung ist eine bevorzugte Ausführungsform der Erfindung dargestellt, und zwar ein Schnitt durch einen Teil einer Plattenwand mit ausgespachtelter Fuge.

Die Plattenwand gemäß Zeichnung besitzt einen vertikalen Trägerbalken (1) oder Ständer, an dem zwei in einer gemeinsamen Ebene angeordnete Bauplatten (2) angelegt und in nicht näher gezeigter Weise befestigt sind. Die Bauplatten (2) sind Gipskartonplatten, die mit Karton (3) ummantelt sind. Der Übergang (4) an der Längsstirnseite von der vorderen Flachseite (5) zur hinteren Flachseite (6) hin ist ein Viertelkreis. Die beiden hinteren Längskanten (7) berühren einander, worunter auch zu verstehen ist, daß in der Praxis zwischen den beiden Längskanten ein sehr kleiner Spalt vorhanden sein kann. Die gewölbttrichterförmige Fuge (8) ist mit Füllmasse (9) ausgespachtelt, deren Vorderseite in der Ebene der vorderen Flachseite der ummantelten Bauplatten (2) liegt.

Die vorher gemachten Prozentangaben sind Gewichtsprozent. In der ausgehärteten Füllmasse sind die Bestandteile der Mischung enthalten, wobei der Gips vollständig in Calciumsulfat-Dihydrat übergegangen ist. Etwa ein Drittel des Anmachwassers ist durch das Abbinden verbraucht und zwei Drittel sind verdunstet. Das Dispersionspulver verklebt das Gefüge des abgebundenen Gipses und diesen mit dem Karton. Unter « Plattenwand » ist hier auch eine Deckenfläche zu verstehen. Mit Trägerbalken ist jede Art von Unterkonstruktion gemeint. Die Dicke der ummantelten Bauplatten liegt üblicherweise im Bereich 9,5-18 mm und ist in DIN 18180 geregelt.

Die vorliegende Fugengestaltung besteht aus einer Kombination, bei der die Gipskartonplatten sehr weit zu den hinteren Längskanten im Viertelkreis abgerundet sind, was die « gestoßene » Plattenmontage erlaubt. Trotzdem ist eine Ausfüllung der Fuge in voller Querschnittsdicke ohne besondere Sorgfalt beim Verspachteln ermöglicht und ist eine günstige Kraftverteilung bei Zugbeanspruchung der Fuge bewirkt. Es ist der im konventionellen System eingelagerte Bewehrungsstreifen weggelassen. Das ist weiterhin ermöglicht durch die Verwendung eines Fugenfüllers, der aufgrund des hohen α-Gips-Gehaltes gute Verbundfestigkeit zum Karton und hohe Zug- und Druckfestigkeit aufweist und der als weitere für das System bzw. den Arbeitsablauf wichtige Eigenschaften ein niedriges Anmachwasser-Feststoffverhältnis besitzt, nur geringes Einfallen zeigt und auf relativ kurzen Versteifungsbeginn eingestellt ist. Daneben sind sehr gute Schleifbarkeit und schnelle Austrocknung gegeben.

Vorteile der vorliegenden Fugengestaltung gegenüber konventionellen Fugengestaltungen sind : Schneller Arbeitsablauf bis zur fertigverfugten Fläche (kürzere Zeitspanne von ca. einer Stunde wegen nur zwei Spachtelungen ohne Zwischentrocknung, es muß kein Bewehrungsstreifen eingelegt werden, die Trocknung erfolgt rasch) ; gegebenenfalls erforderliches Schleifen geht leicht ; ein Markieren der Fuge tritt nicht bzw. nur in verminderter Deutlichkeit auf ; die benötigte Füllmenge an Fugenfüller ist um ca. 1/3 vermindert. Dabei ist die Fuge nach vorne zum einfachen Spachteln bzw. Glätten ausreichend breit.

**Patentansprüche**

1. Plattenwand, bei der zwei ummantelte Bauplatten (2) mit je einer Längsseite auf Stoß zueinander angeordnet, mit hinteren Längskanten (7) aneinander anliegend vorgesehen und auf der hinteren Flachseite (6) mit dem Längsrandstreifen an einem Trägerbalken (1) anliegend an diesem befestigt sind, bei der jede der Bauplatten (2) im Stoßbereich einen bogenförmigen, mit Ummantelung (3) versehenen Übergang (4) über die volle Plattendicke von der vorderen Flachseite (5) bis zu der hinteren Längskante (7) bildet, bei der die somit im Querschnitt gewölbttrichterförmige Fuge (8) unter Weglassung eines Bewehrungsstreifens mit einer Füllmasse (9) ausgespachtelt ist, dadurch gekennzeichnet, daß die Füllmasse (9) hergestellt ist aus einer Mischung von Gips (Calciumsulfat-Halbhydrat), Kalksteinmehl, Glimmer, Dispersionpulver, Sulfatbeschleuniger, Cellulosederivat, Keratin-Verzögerer und Netzmittel bei einem bestimmten Anmachwasser-Feststoffverhältnis und daß der Übergang (4) von der vorderen Flachseite (5) zur hinteren Längskante (7) viertelkreisförmig ausgebildet ist und die Mischung, aus welcher die Füllmasse (9) hergestellt ist, 70-95 % α-Gips enthält und unter Weglassung von Zusätzen wie Polyvinylalkohol, Asbest und Bentonit auf ein Anmachwasser-Feststoffverhältnis von maximal 0,5 eingestellt ist.

2. Plattenwand nach Anspruch 1, dadurch gekennzeichnet, daß die Mischung, aus welcher die Füllmasse (9) hergestellt ist, mindestens 75 % vorzugsweise 85 %, α-Gips enthält.

3. Plattenwand nach Anspruch 1 oder 2, dadurch gekennzeichnet, daß die Mischung, aus welcher die Füllmasse (9) hergestellt ist, 6-13 %, vorzugsweise ca. 10 %, Kalksteinmehl enthält.

4. Plattenwand nach Anspruch 1, 2 oder 3, dadurch gekennzeichnet, daß die Mischung, aus welcher die Füllmasse (9) hergestellt ist, 3-8 %, vorzugsweise ca. 5 %, Glimmer enthält.

5. Plattenwand nach einem der vorhergehenden Ansprüche, dadurch gekennzeichnet, daß die Mischung, aus welcher die Füllmasse (9) hergestellt ist, ein Kunststoff-Dispersionspulver aus einem Vinyl-Copolymerisat enthält.

6. Plattenwand nach einem der vorhergehenden Ansprüche, dadurch gekennzeichnet, daß die Mischung, aus welcher die Füllmasse (9) hergestellt ist, 0,2-0,6 %, vorzugsweise ca. 0,4 % Celluloseäther enthält.

### Claims

1. A panel wall in which two encased structural panels (2) are disposed so that they abut one another along a longitudinal side, the rear longitudinal edges (7) being adjacent one another and the rear flat side (6) having a longitudinal edge strip adjacent and secured to a girder (1), each structural panel (2) in the abutting region forming an arcuate, encased (3) transition (4) over the entire thickness of the panel from the front flat side (5) to the rear longitudinal edge (7), the resulting joint (8), which in cross-section has a curved funnel shape, being trowelled off with a filling compound (9) but leaving a reinforcing strip, characterised in that the filling compound (9) is made from a mixture of plaster (calcium sulphate hemihydrate), limestone meal, mica, dispersion powder, sulphate accelerator, cellulose derivative, keratin retarder and wetting agent at a preset mixing-water/solid ratio and the transition (4) from the front flat side (5) to the rear longitudinal edge (7) forms a quarter-circle and the mixture from which the filling compound (9) is produced contains 70-95 % α-gypsum and, apart from additives such as polyvinyl alcohol, asbestos and bentonite is adjusted to a mixing-water/solid ratio of not more than 0.5.

2. A panel wall according to claim 1, characterised in that the mixture from which the filling compound (9) is made, contains at least 75 % and preferably 85 % of α-gypsum.

3. A wall according to claim 1 or 2, characterised in that the mixture from which the filling compound (9) is made, contains 6-13 %, preferably about 10 % limestone meal.

4. A wall according to claim 1, 2 or 3, characterised in that the mixture from which the filling compound (9) is made contains 3-8 %, preferably about 5 % of mica.

5. A wall according to any of the preceding claims, characterised in that the mixture from which the filling compound (9) is made contains a vinyl copolymer plastics dispersion powder.

6. A wall according to any of the preceding claims, characterised in that the mixture from which the filling compound (9) is made contains 0,2-0,6 %, preferably about 0,4 % cellulose ester.

### Revendications

1. Paroi constituée de plaques, dans laquelle deux éléments de construction en forme de plaques revêtues (2) sont disposés bout à bout par des tranches longitudinales, en s'appliquant l'un contre l'autre par des arêtes longitudinales arrière (7), en étant appuyés sur une poutre de support par une partie en forme de bande longeant le bord longitudinal de la face arrière plane (6), et en étant fixés à cette poutre, dans laquelle chacune des plaques (2), dans la zone du joint, forme une transition courbe (4) munie de revêtement (3), qui s'étend sur toute l'épaisseur de la plaque, depuis la face avant plane (5) jusqu'à l'arête longitudinale arrière (7), et dans laquelle le joint (8), possédant ainsi, en section droite, la forme d'un entonnoir avec des côtés concaves, est rempli d'une masse de remplissage (9), à la spatule ou au moyen d'un instrument analogue, sans utilisation d'une bande d'armature, caractérisée en ce que la masse de remplissage (9) est produite d'un mélange de plâtre (sulfate de calcium semi-hydraté), farine de calcaire, mica, poudre de dispersion, accélérateur au sulfate, dérivé cellulosique, retardateur à la kératine et agent mouillant, avec un rapport eau de gâchage-solide déterminé, que la transition (4) est réalisée en quart de cercle, depuis la face avant (5) jusqu'à l'arête longitudinale arrière (7), et que le mélange d'où est produite la masse de remplissage (9) contient 70-95 % de semi-hydrate α et est ajusté à un rapport eau de gâchage-solide de tout au plus 0,5, sans utilisation d'additions telles qu'alcools polyvinyliques, asbeste et bentonite.

2. Paroi selon la revendication 1, caractérisée en ce que le mélange, d'où est produite la masse de remplissage (9), contient au moins 75 % et de préférence 85 % de semi-hydrate α.

3. Paroi selon la revendication 1 ou 2, caractérisée en ce que le mélange, d'où est produite la masse de remplissage (9), contient 6-13 %, de préférence environ 10 % de farine de calcaire.

4. Paroi selon la revendication 1, 2 ou 3, caractérisée en ce que le mélange, d'où est produite la masse de remplissage (9), contient 3-8 %, de préférence environ 5 % de mica.

5. Paroi selon une des revendications précédentes, caractérisée en ce que le mélange, d'où est produite la masse de remplissage (9), contient une poudre de dispersion de matière plastique constituée d'un copolymère de vinyle.

6. Paroi selon une des revendications précédentes, caractérisée en ce que le mélange, d'où est produite la masse de remplissage (9), contient 0,2-0,6 %, de préférence environ 0,4 % d'éther cellulosique.